# EUROPÄISCHE PATENTANMELDUNG

(11) **EP 1 619 603 A2**
(43) Veröffentlichungstag der Anmeldung: **25.01.2006**
(21) Anmeldenummer: 05018042.1
(22) Anmeldetag: 09.07.2003
(51) Int. Cl.: G06K 7/00, H01R 13/24, G06K 13/08

(54) **Kontaktiervorrichtung für eine Chipkarte, insbesondere für eine SIM-Karte**

(30) Priorität: 15.08.2002 DE 10238156
(62) Teilanmeldung aus: 03015425.6
(71) Anmelder: Lumberg Connect GmbH & Co. KG, 58579 Schalksmühle (DE)
(72) Erfinder: Pellizari, Dirk, 42327 Wuppertal (DE)
(74) Vertreter: Ostriga, Sonnet, Wirths & Roche

(57) **Zusammenfassung**

Dargestellt und beschrieben ist eine geschirmte Kontaktiereinrichtung für Chip-Kartenleser, insbesondere für SIM-Card-Reader mit elektrisch leitfähigem Deckel, der in Bezug zu einem Kontaktträger schwenkbar angeordnet ist. Dabei ist die Gelenkanordnung zwischen Deckel und Kontaktträger elektrisch leitfähig ausgebildet und dem Kontaktträger zugeordnete Lagerelemente sind galvanisch mit dem Massepotential der Schaltung verbunden.

## Beschreibung

Die Erfindung betrifft eine Kontaktiervorrichtung für eine Chipkarte, insbesondere für eine SIM-Karte, nach dem Oberbegriff des Anspruchs 1.

Derartige Kontaktiervorrichtungen, in der Umgangssprache und auch in der Patentliteratur häufig unzutreffend mit "Chipkarten-Leser", "SIM-Card-Reader" od. dgl. bezeichnet, dienen zur Halterung und Bereitstellung der elektrischen Kontaktierung der Kontakte einer Chip- oder SIM-Karte (SIM = "Subscriber Identity Module") mit Leiterbahnen eines Schaltungsträgers wie insbesondere einer Leiterplatte, die in einem elektronischen Gerät, z.B. einem Mobiltelefon, untergebracht ist.

Eine Kontaktiervorrichtung solcher Art ist beispielsweise aus DE 195 21 721 A1 bekannt, von der die vorliegende Erfindung ausgeht. Dabei sind im Kontaktträger neben den sechs üblichen Lesekontakten wenigstens zwei zusätzliche Schaltkontakte untergebracht, die dazu dienen, bei geschlossenem Deckel der Kontaktiervorrichtung, der aus Metall oder metallisiertem Kunststoff besteht, eine Erd- bzw. Masseverbindung zur Leiterplatte herzustellen und dadurch eine den EMV-Forderungen gemäße Schirmung zu ermöglichen. Des weiteren ist im Deckel eine Andruckfeder ausgebildet, die beim Einschieben der SIM-Karte in den geöffneten Deckel in Richtung zum Kontaktträger hin gedrückt wird und die nach Schließen des Deckels, der durch Längsverschieben in eine gesicherte Verriegelungslage verbracht wird, die Schaltkontakte kontaktiert, die sodann, also sequentiell, ihrerseits die Verbindung zur Masse der Leiterplatte herstellen.

Aufgabe vorliegender Erfindung ist insbesondere die Schaffung einer geschirmten Kontaktiervorrichtung, die in ihrem Aufbau vereinfacht ist.

Die erfindungsgemäße Lösung dieser Aufgabe besteht in den Merkmalen des unabhängigen Anspruchs. Dem entsprechend ist eine Kontaktiervorrichtung für eine Chipkarte, insbesondere für eine SIM-Karte eines elektronischen Geräts wie z.B. Chipkartenlesegerät, Mobiltelefon od.dgl., mit einem Kontaktträger mit darin aufgenommenen Kontaktelementen zur Verbindung der Kontakte der Chipkarte mit Leiterbahnen eines in dem Gerät enthaltenen Schaltungsträgers wie Leiterplatte, einem elektrisch leitfähigen Deckel, der schwenkbar am Kontaktträger gelagert ist, und eine Aufnahme für die SIM-Karte beinhaltet, und mit einer Einrichtung zur Schirmung durch eine leitende Verbindung zwischen dem Deckel und einer Erd- oder Massekontaktierungsfläche des Schaltungsträgers, wobei zur schwenkbeweglichen Lagerung des Deckels am Kontaktträger wenigstens ein Schwenklager vorgesehen ist, dadurch gekennzeichnet, dass die Lagerelemente des Schwenklagers elektrisch leitfähig ausgebildet bzw. behandelt sind und wenigstens ein kontaktträgerseitiges Lagerelement galvanisch mit einem Erd- oder Massekontakt des Schaltungsträgers verbunden ist.

Ein wesentlicher Vorteil der Erfindung besteht zunächst in der besonderen Einfachheit der Kontaktiervorrichtung, und zwar sowohl hinsichtlich Aufbau als auch im Hinblick auf eine sichere Funktion. Die Fertigung des Deckels ist gegenüber einem herkömmlichen nicht aufwendiger.

Im Unterschied zum Stand der Technik erfolgt der Masseschluss nicht sequentiell (Deckel - Schaltkontakt; Schaltkontakt - Platine), sondern unmittelbar durch direkte Kontaktierung des Deckels mit dem Massepotential der elektronischen Schaltung.

Ein weiterer erheblicher Vorteil gegenüber dem in Bezug genommenen Stand der Technik wird darin gesehen, dass die Schirmung auch bei nicht in die Vorrichtung eingesetzter Chipkarte wirksam ist. So ist sichergestellt, dass eine Berührung des elektrisch leitfähigen Deckels, beispielsweise um ihn zum Einsatz einer SIM-Karte zu öffnen, nicht zu einer Beschädigung der Elektronik führen kann, weil auch in diesem Fall elektrostatische Aufladungen zum Massepotential abgeleitet werden.

Diese erfindungsgemäße Lösung hat insbesondere den Vorteil, dass die Kontaktiervorrichtung ständig geschirmt ist, und zwar auch dann, wenn der Deckel geöffnet ist. Der bauliche und konstruktive Aufwand für diese Kontaktiervorrichtung ist gering. Vorzusehen sind lediglich elektrisch leitfähige Lagerelemente und eine galvanische Potentialverbindung.

Die Erfindung wird nachfolgend unter Bezugnahme auf in den beiliegenden Zeichnungen dargestellte Ausführungsbeispiele näher erläutert. Es zeigen:
- Fig. 1: eine perspektivische Darstellung einer Kontaktiervorrichtung entsprechend der Erfindung mit einem Kontaktträger und einem teilweise geöffneten Deckel,
- Fig. 2: eine perspektivische Seitenansicht einer in ein Gerät bzw. Geräteausschnitt eingesetzten Kontaktiervorrichtung bei geschlossenem Deckel,
- Fig. 3: eine vergrößerte Darstellung einer Einzelheit aus Fig. 2, und
- Fig. 4: eine perspektivische Darstellung der Kontaktiervorrichtung mit Blickrichtung auf die Lötseite des Kontaktträgers.

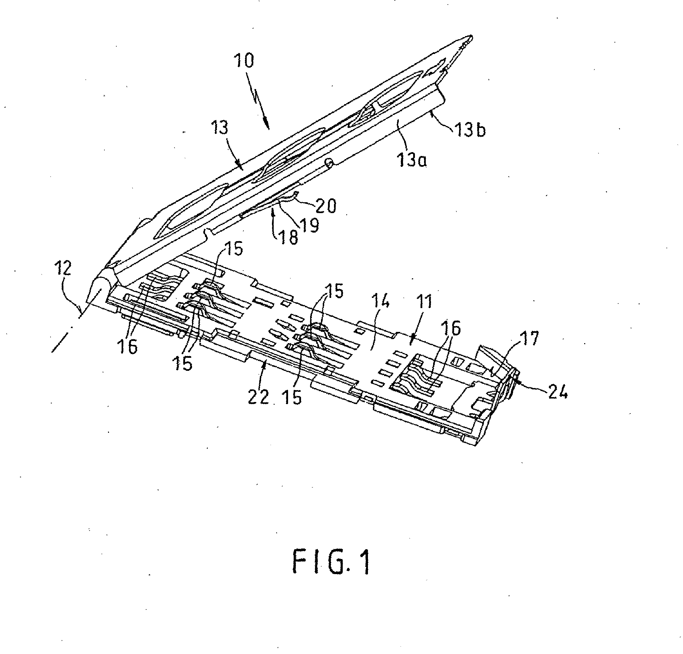

Fig. 1 zeigt eine insgesamt mit 10 bezeichnete Kontaktiervorrichtung für Chip-Karten, insbesondere für SIM-Karten, wie sie beispielsweise in Mobiltelefonen eingesetzt werden.

Die Kontaktiervorrichtung 10 umfasst einen Kontaktträger 11 und einen um eine Achse 12 schwenkbar daran angelenkten Deckel 13, wobei im dargestellten Ausführungsbeispiel die Schwenkachse 12 einer Schmalseite von Kontaktträger 11 und Deckel 13 zugeordnet ist.

Im Kontaktträger 11, dessen Korpus 14 aus elektrisch nicht leitendem Isoliermaterial, insbesondere aus Kunststoff besteht, sind - beim Ausführungsbeispiel sechs - Lesekontakte 15 angeordnet zur Kontaktierung mit Kontakten einer nicht dargestellten SIM-Karte, die in bekannter Weise zwischen Kontaktträger 11 und Deckel 13 in die Vorrichtung 10 eingesetzt wird. Mit 16 sind SMD-Lötfüßchen bezeichnet, die stoffschlüssiger Bestandteil der Lesekontakte 15 sind und die galvanische Verbindung zu einem ebenfalls nicht gezeigten Schaltungsträger, also insbesondere einer Leiterplatte dienen.

Mit 17 ist eine am Kontaktträger 11 angebrachte Kodier-Schrägfläche bezeichnet, die sicherstellt, dass die SIM-Karte, die ihrerseits bekanntermaßen eine entsprechend gebrochene Ecke aufweist, nur mit ihrer korrekten Ausrichtung in die Kontaktiervorrichtung 10 eingesetzt werden kann.

Der Deckel 13 besteht beim dargestellten Ausführungsbeispiel aus einem Blech-Stanz-Biegeteil, also aus einem elektrisch leitenden Material. Er könnte auch aus anderen leitfähigen Materialen bestehen, z.B. aus elektrisch leitendem oder leitfähig beschichtetem Kunststoff.

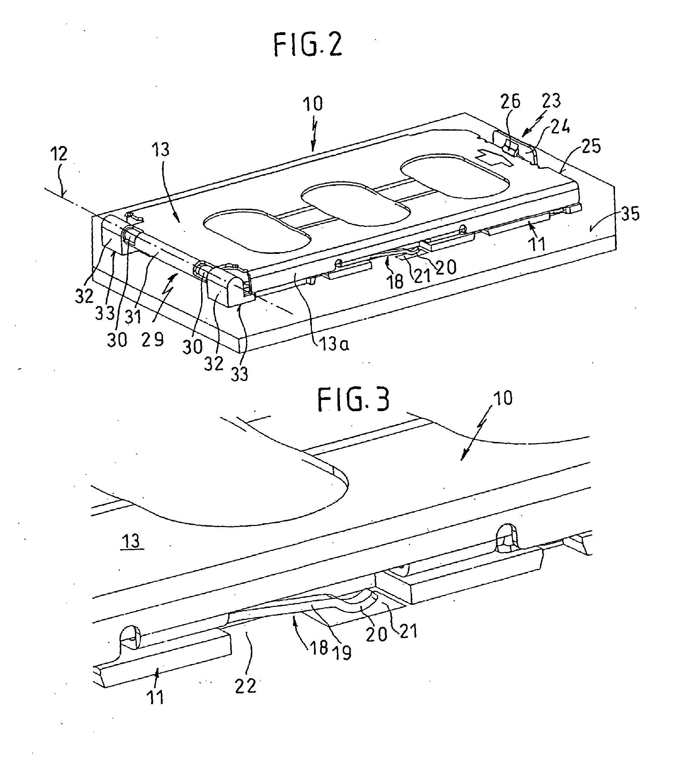

Wie ausgeführt, ist der Deckel 13 an seiner bezüglich Fig. 1 hinteren Schmalkante über die Schwenkachse 12 mit dem Kontaktträger 11 schwenkbar verbunden. Er kann deshalb von einer gegenüber der Darstellung in Fig. 1 noch weiter geöffneten Stellung bis in die Schließstellung verschwenkt werden, die in Fig. 2 dargestellt ist.

Ein Merkmal des Deckels 13 besteht zunächst darin, dass er einen Kontaktabschnitt 18 aufweist. Dieser zungenförmige Kontaktabschnitt 18 ist beim Ausführungsbeispiel werkstoffeinheitlich-stoffschlüssiger Bestandteil des Deckels 13, d.h. also insbesondere durch Stanzen und Biegen aus dem Deckel 13 selbst herausgeformt. Wie die Figuren erkennen lassen, ist der Kontaktabschnitt 18 einem aus der Hauptebene des Deckels heruntergebogenen Längsseitenrand 13a des Deckels 13 zugeordnet. Schließlich ist die Anordnung des Kontaktabschnitts 18 so getroffen, dass er innerhalb der zum Kontaktträger 11 weisenden Randkante 13b des Deckelrandes 13a angeordnet ist, dem gegenüber das freie Ende der Zunge 19 mit Richtung zum Kontaktträger 11 hin vorsteht.

Fig. 2 zeigt die Kontaktiervorrichtung 10 in einen Geräteausschnitt 35 eingesetzt, wobei nun der Deckel 13 geschlossen dargestellt ist. Da in der Schließstellung des Deckels 13 der Deckelrand 13a den Kontaktträger 11 seitlich zumindest teilweise übergreift, ist folglich der Kontaktabschnitt 18 gewissermaßen "voreilend" angeordnet. Das bedeutet, dass in der Schließstellung des Deckels der Kontaktabschnitt 18 mit seinem kontaktierungsbestimmenden Endabschnitt 20 eine Kontaktfläche 21 berühren und sich unter Federkraft auf ihr abstützen kann, die Teil einer ansonsten nicht näher gezeigten elektronischen Schaltung ist. Bei der Kontaktfläche 21 handelt es sich z.B. um einen Leiterbahnabschnitt des Massepotentials der elektronischen Schaltung.

Wie schließlich aus den Figuren noch zu erkennen ist, befindet sich der Kontaktabschnitt 18 am Deckel 13 relativ zum Kontaktträger 11 an einer Stelle, an der letzterer einen Randausschnitt 22 aufweist. Deshalb kann der Kontaktabschnitt 18 im wesentlichen noch innerhalb des Umrisses des Kontaktträgers 11 angeordnet werden, benötigt also keinen zusätzlichen Flächenbedarf.

Zur Verriegelung des Deckels 13 in seiner Schließstellung bezüglich des Kontaktträgers 11 ist zudem eine Verriegelungsanordnung vorgesehen, die insgesamt mit 23 bezeichnet ist. Diese umfasst einerseits am Kontaktträger 11 an seiner der Schwenkachse 12 gegenüberliegenden Schmalseite eine Riegellasche 24, die nach Art einer Clipsverbindung wiederlösbar mit einem Abschnitt des vorderen Randes 25 des Deckels 13 zusammenwirkt. Beim dargestellten Ausführungsbeispiel erfolgt die Verriegelung mittels einer keilförmigen Riegelzunge 26, die in die Bewegungsbahn der vorderen Randkante 25 des Deckels 13 hineinragt. Wird der Deckel geschlossen, bewegt seine Vorderkante 25 die federelastisch ausgebildete oder angeordnete Riegellasche 24 vorübergehend ausweichend, bis bei geschlossenem Deckel die Riegelzunge 26 die Deckelrandkante 25 hinterfängt, so wie dies in Fig. 2 dargestellt ist.

Durch Schließen des Deckels 13 werden die Kontaktkräfte auf die Kontakte 15 aufgebracht und in der Deckelschließstellung sichergestellt. Daraus resultiert für die Schließstellung der Vorrichtung 10, dass die Kontaktkräfte die sichere Verriegelung des Deckels 13 unterstützen.

Was die an der Stirnkante 25 des Deckels 13 angeordnete Riegellasche 24 betrifft, so sichert diese den Deckel 13 auch gegen ein unerwünschtes Verschieben in Richtung des in Fig. 2 auf die Riegellasche weisenden Pfeils. Eine solche Bewegung könnte ansonsten aufgrund vorhandener Toleranzen möglich sein.

Soll der Deckel 13 geöffnet werden, drückt man die Riegellasche 24 ein wenig nach außen, bis die Riegelzunge 26 die Deckelrandkante 25 wieder freigibt.

Die Riegellasche 24 kann einstückig-stoffschlüssiger Bestandteil des Isolierkörpers des Kontaktträgers 11 sein. Beim dargestellten Ausführungsbeispiel ist eher daran gedacht, die Riegellasche 24 an einem Metallbauteil auszubilden, und zwar einerseits aus Stabilitäts- und Elastizitätsgründen und andererseits aus Gründen, die weiter unten beschrieben werden.

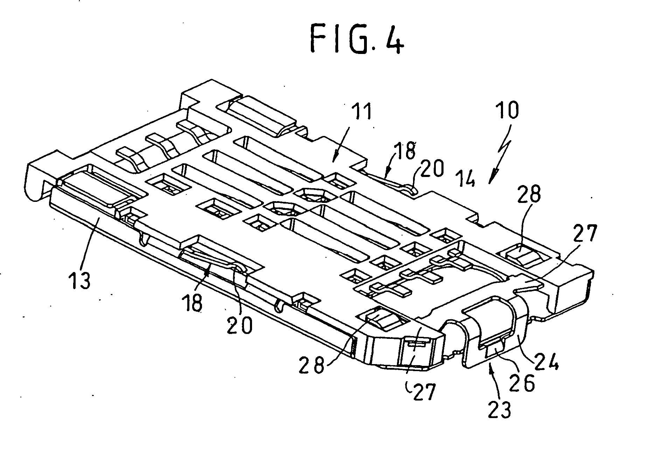

Die Fig. 4 zeigt die Anordnung einer aus elektrisch leitfähigem Material, insbesondere Metall bestehenden Riegelzunge 24. Mit ihren Verankerungsabschnitten 27 ist die Riegellasche 24 in den Isolierkörper 14 des Kontaktträgers 11 eingespritzt. Die Enden der Abschnitte 27 sind als SMD-Lötfüßchen 28 ausgebildet, womit die Riegellasche 24 und im übrigen auch der Isolierkörper 11 der Kontaktiervorrichtung auf dem Schaltungsträger, also insbesondere einer Leiterplatte, befestigt bzw. zusätzlich gehalten werden kann.

Die Riegellasche 24 ist - alternativ oder ergänzend zu dem bereits beschriebenen Kontaktabschnitt 18 - zur Schirmung der Kontaktiervorrichtung 10 vorgesehen und ausgestaltet. Im Unterschied zum bisher Beschriebenen ist daher anzumerken, dass in diesem Fall die SMD-Lötfüßchen 28 nicht nur zum mechanischen Halt auf der Leiterplatte dienen, sondern vor allem und in erster Linie zur galvanischen Verbindung mit einem dem Erd- oder Massepotential des Schaltungsträgers zugeordneten Kontaktfläche. In diesem Fall besteht das Bauteil, welches die SMD-Lötfüßchen 28 und die Riegellasche 24 aufweist, selbstverständlich aus elektrisch leitfähigem Material, vorzugsweise aus Metallblech.

Wird bei einer derartigen Kontaktiervorrichtung 10 der Deckel 13 geschlossen und gelangt er sodann in verriegelnden Kontakt mit der Riegellasche 24, erfolgt an dieser Stelle eine galvanische Verbindung zwischen Deckel 13 und dem Massepotential der elektronischen Schaltung des Geräts.

Das beanspruchte Schirmungsprinzip im Bereich der Schwenkachse 12 sei unter Bezugnahme auf die Zeichnungen wie folgt erläutert:

Wie am besten aus Fig. 2 ersichtlich, ist im Bereich der Schwenkachse 12 eine Gelenkverbindung 29 vorgesehen, die zur schwenkbeweglichen Lagerung des Deckels 13 relativ zum Kontaktträger 11 dient. Mit 30 sind kontaktträgerseitige Lagerzapfen bezeichnet, wohingegen der hintere umgerollte Rand 31 des Deckels 13 eine Lagerhülse ausbildet, in die die Lagerzapfen 30 gleitschlüssig eingreifen. Die Lagerzapfen 30 ragen von Lagerböckchen 32 ab, die - wie auch die Lagerzapfen 30 - aus elektrisch leitfähigem Material bestehen. Die Unterflächen 33 der Lagerböcke 32 können unmittelbar auf eine dem Erd- bzw. Massepotential zuzurechnende Leiterbahn eines Schaltungsträgers aufgelötet sein. Im übrigen wären die Lagerböckchen 32 im Isolierstoffkorpus 14 des Kontaktträgers 11 zu verankern, insbesondere in diesen teilweise einzuformen.

Da in diesem Fall über die Gelenkanordnung 29 eine unmittelbare galvanische Verbindung des Deckels 13 mit dem Erd- oder Massepotential der elektronischen Schaltung besteht, findet eine Abschirmung in jeder beliebigen Position des Deckels 13 statt und unabhängig davon, ob eine SIM-Karte in die Kontaktiervorrichtung 10 eingesetzt ist oder nicht.

Was die Aufnahme der SIM-Karte in der Kontaktiervorrichtung 10 betrifft, so ist diese nicht dargestellt. Es ist daran gedacht, wie an sich üblich, an der Unterseite des Deckels 13 - in der Regel durch Randumformungen - eine Führung auszubilden, so dass die SIM-Karte in den Deckel 13 eingeschoben werden kann, bevor dieser geschlossen wird.

## Patentansprüche

1. Kontaktiervorrichtung (10) für eine Chipkarte, insbesondere für eine SIM-Karte eines elektronischen Geräts wie z.B. Chipkartenlesegerät, Mobiltelefon od.dgl., mit
einem Kontaktträger (11) mit darin aufgenommenen Kontaktelementen (15) zur Verbindung der Kontakte der Chipkarte mit Leiterbahnen eines in dem Gerät enthaltenen Schaltungsträgers wie Leiterplatte,
einem elektrisch leitfähigen Deckel (13), der schwenkbar am Kontaktträger (11) gelagert ist, und eine Aufnahme für die SIM-Karte beinhaltet,
und mit einer Einrichtung zur Schirmung durch eine leitende Verbindung zwischen dem Deckel (13) und einer Erd- oder Massekontaktierungsfläche (21) des Schaltungsträgers,
wobei zur schwenkbeweglichen Lagerung des Deckels (13) am Kontaktträger (11) wenigstens ein Schwenklager (29) vorgesehen ist,
**dadurch gekennzeichnet,**
**dass** die Lagerelemente des Schwenklagers (29) elektrisch leitfähig ausgebildet bzw. behandelt sind und wenigstens ein kontaktträgerseitiges Lagerelement (30) galvanisch mit einem Erd- oder Massekontakt des Schaltungsträgers verbunden ist.

2. Kontaktiervorrichtung nach Anspruch 1, **dadurch gekennzeichnet, dass** das Schwenklager (29) kontaktträgerseitige Lagerzapfen (30) umfasst und ein hinterer umgerollter Rand (31) des Deckels (13) eine Lagerhülse ausbildet, in die die Lagerzapfen (30) gleitschlüssig eingreifen.

3. Kontaktiervorrichtung nach Anspruch 2, **dadurch gekennzeichnet, dass** die Lagerzapfen (30) ragen von Lagerböckchen (32) abragen, die aus elektrisch leitfähigem Material bestehen.

4. Kontaktiervorrichtung nach Anspruch 3, **dadurch gekennzeichnet, dass** Unterflächen (33) der Lagerböckchen (32) unmittelbar auf eine dem Erd- bzw. Massepotential zuzurechnende Leiterbahn eines Schaltungsträgers aufgelötet sind.

5. Kontaktiervorrichtung nach Anspruch 3 oder 4, **dadurch gekennzeichnet, dass** die Lagerböckchen (32) im Isolierstoffkorpus (14) des Kontaktträgers (11) verankert, insbesondere in diesen teilweise eingeformt sind.
